# EUROPEAN PATENT APPLICATION

(11) **EP 3 754 974 A1**
(43) Date of publication of application: **23.12.2020**
(21) Application number: 19753847.3
(22) Date of filing: 22.01.2019
(51) Int. Cl.: H04N 5/76

(54) **PROCESSING METHOD FOR VEHICLE DIAGNOSTIC REPORT, DEVICE, DIAGNOSTIC APPARATUS, AND SYSTEM**

(30) Priority: 14.02.2018 CN 201810151901
(71) Applicant: AUTEL INTELLIGENT TECHNOLOGY CORP., LTD., Shenzhen, Guangdong 518055 (CN)
(72) Inventor: YANG, Yuexi, Shenzhen, Guangdong 518055 (CN); YU, Chaochao, Shenzhen, Guangdong 518055 (CN)
(74) Representative: Gulde & Partner
(86) International application number: PCT/CN2019/072713
(87) International publication number: WO 2019/157917

(57) **Abstract**

The present invention provides a method, an apparatus and a system for processing a vehicle diagnosis case and a diagnosis device. The method includes: when a first operation input by a user is received, collecting at least two signals during diagnosis of a vehicle; and combining the at least two signals into a diagnosis case of the vehicle. Therefore, a plurality of pieces of information during the vehicle diagnosis is synchronously collected, and a multimedia diagnosis case including the plurality of pieces of information is made during the diagnosis, leading to a simpler and more convenient diagnosis case making process.

## Description

The present application claims the priority to Chinese patent application no. 201810151901.9, filed with the Chinese patent office on February 14, 2018 entitled "METHOD, APPARATUS AND SYSTEM FOR PROCESSING VEHICLE DIAGNOSIS CASE AND DIAGNOSIS DEVICE", which is incorporated herein by reference in its entirety.

### BACKGROUND

### Technical Field

The present application relates to the technical field of vehicle diagnosis, and in particular, to a method, an apparatus and a system for processing a vehicle diagnosis case and a diagnosis device.

### Related Art

With the development of vehicle fault diagnosis technologies, vehicle diagnosis tools may be used to quickly diagnose a vehicle to determine whether a vehicle fails and whether to perform maintenance. Further, a diagnosis tool, such as a vehicle diagnosis device may generate a diagnosis case, and a user may learn a diagnosis method or a fault state of a vehicle through the diagnosis case, improving user experience.

However, the diagnosis case generated by the current vehicle diagnosis device has a single effect, causing poor user experience.

### SUMMARY

The present invention provides a method, an apparatus and a system for processing a vehicle diagnosis case and a diagnosis device, to synchronously collect a plurality of pieces of information during vehicle diagnosis and formulate a multimedia diagnosis case including the plurality of pieces of information during the diagnosis.

According to a first aspect, an embodiment of the present invention provides a method for processing a vehicle diagnosis case, including:
when a first operation input by a user is received, collecting at least two signals during diagnosis of a vehicle; and
combining the at least two signals into a diagnosis case of the vehicle.

Optionally, before the collecting at least two signals during diagnosis of a vehicle, the method further includes:
determining at least two first signals according to the first operation.

The collecting at least two signals includes:
collecting at least two of the first signals.

Preferably, the method further includes:
receiving a second operation input by the user during the diagnosis of the vehicle; and
determining at least one second signal according to the second operation.

The collecting at least two signals further includes:
collecting at least one of the second signals.

Optionally, the first signal or the second signal includes:
at least one of a first video signal of a recorded diagnosis operation picture, a second video signal of a recorded diagnosis site, a first audio signal of the vehicle and a second audio signal of a diagnosis person.

Optionally, the method further includes:
outputting at least one signal in the diagnosis case.

Optionally, the outputting at least one signal in the diagnosis case includes:
if the at least one signal includes at least two video signals, determining a display area corresponding to each video signal on a display screen; and
displaying a corresponding video signal at the display area on the display screen.

Optionally, the method further includes:
receiving a third operation input by the user, and determining a display area corresponding to the third operation; and
adjusting a manner of displaying a video signal in the display area corresponding to the third operation.

Optionally, the method further includes:
sending the at least one signal in the diagnosis case to a control terminal, so that the control terminal outputs the at least one signal.

Optionally, the method further includes:
receiving a control instruction of the control terminal for the at least one signal; and
controlling the at least one signal according to the control instruction.

According to a second aspect, an embodiment of the present invention provides an apparatus for processing a vehicle diagnosis case, including:
a collecting module configured to: when a first operation input by a user is received, collect at least two signals during diagnosis of a vehicle; and
a combining module configured to combine the at least two signals into a diagnosis case of the vehicle.

Optionally, the apparatus further includes:
a determining module configured to: before the at least two signals are collected during the diagnosis of the vehicle, determine at least two first signals according to the first operation.

The collecting at least two signals includes:
collecting at least two of the first signals.

Optionally, the collecting module is further configured to: receive a second operation input by the user during the diagnosis of the vehicle; and
determine at least one second signal according to the second operation.

The collecting at least two signals further includes:
collecting at least one of the second signals.

Optionally, the first signal or the second signal includes:
at least one of a first video signal of a recorded diagnosis operation picture, a second video signal of a recorded diagnosis site, a first audio signal of the vehicle and a second audio signal of a diagnosis person.

Optionally, the apparatus further includes:
an output module configured to output at least one signal in the diagnosis case.

Optionally, the outputting at least one signal in the diagnosis case includes:
if the at least one signal includes at least two video signals, determining a display area corresponding to each video signal on a display screen; and
displaying a corresponding video signal at the display area on the display screen.

Optionally, the collecting module is further configured to: receive a third operation input by the user, and determine a display area corresponding to the third operation; and
adjust a manner of displaying a video signal in the display area corresponding to the third operation.

Optionally, the apparatus further includes:
a sending module configured to send the at least one signal in the diagnosis case to a control terminal, so that the control terminal outputs the at least one signal.

Optionally, the apparatus further includes:
a receiving module configured to receive a control instruction of the control terminal for the at least one signal; and
a control module configured to control the at least one signal according to the control instruction.

According to a third aspect, an embodiment of the present invention provides a system for processing a vehicle diagnosis case, including: a diagnosis device and a control terminal.

The diagnosis device is configured to perform the method according to any of the first aspect.

The control terminal is configured to receive at least one signal sent by the diagnosis device and output the at least one signal.

The control terminal is further configured to send a control instruction for the at least one control signal to the diagnosis device, so that the diagnosis device controls the at least one signal according to the control instruction.

According to a fourth aspect, an embodiment of the present invention provides a diagnosis device, including:
a memory configured to store a program;
a processor configured to execute the program stored in the memory, when the program is executed, the processor being configured to perform the method according to any of the first aspect.

According to a fifth aspect, an embodiment of the present invention provides a computer readable storage medium, including: an instruction that, when run on a computer, causes a computer to perform the method according to any of the first aspect.

According to the method, the apparatus and the system for processing a vehicle diagnosis case provided in the embodiments of the present invention, when the first operation input by the user is received, the at least two signals are collected during the diagnosis of the vehicle. The at least two signals are combined into the diagnosis case of the vehicle. Therefore, a plurality of pieces of information during the vehicle diagnosis is synchronously collected, and a multimedia diagnosis case including the plurality of pieces of information is formulated during the diagnosis, leading to a simpler and more convenient diagnosis case formulation process and a rich effect.

### BRIEF DESCRIPTION OF THE DRAWINGS

To describe the technical solutions in the embodiments of the present invention or in the existing technology more clearly, the following briefly describes the accompanying drawings required for describing the embodiments or the existing technology. Apparently, the accompanying drawings in the following description show some embodiments of the present invention, and persons of ordinary skill in the art may still derive other drawings from these accompanying drawings without creative efforts.
FIG. 1 is a schematic diagram of a first scenario according to the present invention;
FIG. 2 is a flowchart of a method for processing a vehicle diagnosis case according to Embodiment 1 of the present invention;
FIG. 3 is a flowchart of a method for processing a vehicle diagnosis case according to Embodiment 2 of the present invention;
FIG. 4 is a schematic diagram of a change in a human-machine interaction interface of a diagnosis device in the method for processing a vehicle diagnosis case according to Embodiment 2 of the present invention;
FIG. 5 is a flowchart of a method for processing a vehicle diagnosis case according to Embodiment 3 of the present invention;
FIG. 6 is a schematic diagram of a second scenario according to the present invention;
FIG. 7 is a schematic structural diagram of an apparatus for processing a vehicle diagnosis case according to Embodiment 4 of the present invention;
FIG. 8 is a schematic structural diagram of an apparatus for processing a vehicle diagnosis case according to Embodiment 5 of the present invention; and
FIG. 9 is a schematic structural diagram of a diagnosis device according to Embodiment 6 of the present invention.

### DETAILED DESCRIPTION

To make the objectives, technical solutions, and advantages of the embodiments of the present invention clearer, the following describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative effects shall fall within the protection scope of the present disclosure.

The terms "first", "second", "third", "fourth", and the like (if exists) in the specification and the claims of the present disclosure and the foregoing accompanying drawings are used for distinguishing similar objects, and do not need to be used for describing a particular sequence or order. It should be understood that data used in this way is interchangeable in a suitable case, so that the embodiments of the present disclosure described herein can be implemented in a sequence in addition to the sequence shown or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

The following describes technical solutions of the present invention in detail with reference to specific embodiments. The following specific embodiments may be mutually combined, and same or similar concepts or processes may not be repeatedly described in some embodiments.

Some terms in the present application are explained below to facilitating understanding by those skilled in the art.
1) Electronic control unit (ECU), which is deployed in various systems, such as an engine system, an emission control system and a fuel system, etc. of a vehicle. The ECU may communicate with a diagnosis device through an OBD interface. The OBD interface may include a plurality of pins. The ECU in each system may be connected to at least one pin in the OBD interface through a bus. Bus protocols used for connecting the systems to corresponding pins may be the same or may vary. No limitation is imposed herein.
2) Microcontroller Unit (MCU), which is also referred to as a single chip microcomputer, and is a chip-level computer formed by appropriately reducing a frequency and a specification of a central processing unit (CPU) and integrating peripheral interfaces such as a memory, a timer, a universal serial bus (USB) and an A/D converter, etc. and even a drive circuit on a single chip, and is configured to perform different combinations of control in different application scenarios.
3) Vehicle communication interface (VCI), which is configured to connect the OBD interface to an external terminal, where the terminal may include a diagnosis device, etc. In the embodiments of the present invention, the diagnosis device may be electrically connected to the OBD interface on the vehicle through the VCI, so that the diagnosis device may obtain a tool transmitted by an ECU in each system in the vehicle or send an instruction or a tool to the ECU through the VCI.

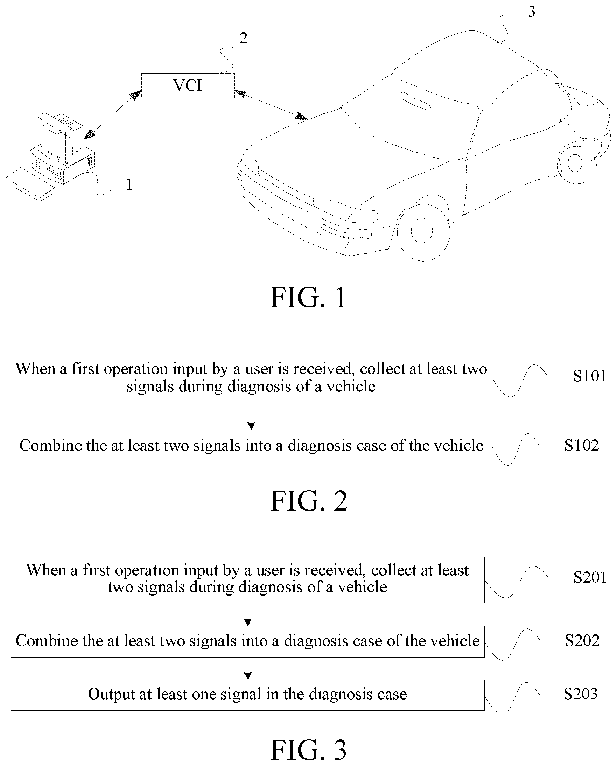

An application scenario in the embodiments of the present application is described below with reference to FIG. 1. In the embodiments of the present application, the application scenario may be understood as a system for processing a vehicle diagnosis case.

FIG. 1 is a schematic diagram of a first scenario according to the present invention. As shown in FIG. 1, this application scenario includes a diagnosis device 1, a VCI 2 and a to-be-inspected vehicle 3. The diagnosis device 1 is electrically connected to an interface of an on-board diagnostics of the to-be-inspected vehicle 3 through the VCI 2. In this application scenario, the vehicle may be the to-be-inspected vehicle 3. Certainly, the vehicle includes, but is not limited to, an automobile, a ship, an airplane, a train, a high-speed rail and a future new type of vehicle.

Diagnosis software or a diagnosis operating system may be installed on the diagnosis device 1 to implement functional diagnosis of the to-be-inspected vehicle 3. The diagnosis device 1 may include a display screen on which a human-machine interaction interface may be displayed. The diagnosis device 1 may further include a video signal collecting apparatus such as a camera and an audio signal collecting apparatus such as a microphone. Certainly, the diagnosis device 1 may further include other apparatuses to implement a diagnosis function. No limitation is imposed herein.

It should be noted that the diagnosis device 1 in FIG. 1 is merely exemplary. Certainly, the diagnosis device 1 may also be implemented by a terminal such as a mobile phone or a tablet computer, etc. An implementation of the diagnosis device 1 is not limited herein in this embodiment of the present application.

After the diagnosis device 1 establishes communication with the ECU in each system in the automobile through the VCI 2, the diagnosis software is run to implement functional diagnosis of the to-be-inspected vehicle 3.

During current diagnosis, the diagnosis device can make a diagnosis case using only one signal. Such a diagnosis case has a single effect and is not vivid. If a user needs to combine a plurality of signals obtained in a same diagnosis process, the user needs to perform a combining operation, resulting in complicated and repeated user operations and low user experience.

In another application scenario, the diagnosis device 1 may not be connected to the to-be-inspected vehicle 3 through the VCI 2. The diagnosis device 1 obtains, through only a video collecting apparatus and/or an audio collecting apparatus configured by the diagnosis device, a video signal and/or an audio signal of on-site diagnosis of the to-be-inspected vehicle 3 performed by maintenance personnel.

The embodiments of the present application are described in combination with the above application scenarios and existing technical problems.

FIG. 2 is a flowchart of a method for processing a vehicle diagnosis case according to Embodiment 1 of the present invention. The method may be used in a vehicle diagnosis device. As shown in FIG. 2, the method in this embodiment may include the following steps.

S101: When a first operation input by a user is received, at least two signals are collected during diagnosis of a vehicle.

In this embodiment, the first operation input by the user may be a touch operation, a pressing operation on a physical key or a voice operation, etc. no limitation is imposed herein. The first operation input by the user is used to instruct the diagnosis device to generate a diagnosis case of the vehicle.

After the first operation input by the user is received, the diagnosis device may collect the at least two signals during the diagnosis of the vehicle.

Optionally, at least two first signals may be determined according to the first operation. The collecting at least two signals includes: collecting at least two of the first signals.

Exemplarily, the first operation may be used to indicate a signal to be collected, and the first operation may be used to instruct to collect at least 2 signals.

In this embodiment, the first signal includes: at least one of a first video signal of a recorded diagnosis operation picture, a second video signal of a recorded diagnosis site, a first audio signal of the vehicle and a second audio signal of a diagnosis person.

The at least two first signals collected under instruction of the first operation may include signals of a same type or of different types. For example, the first operation may indicate that the to-be-collected first signal is the first video signal of the diagnosis operation picture and the second video signal of the recorded diagnosis site. Alternatively, the first operation may indicate that the to-be-collected first signal is a second video signal of a diagnosis site recorded from an angle and a second video signal of a diagnosis site recorded from another angle. Only two signals are used in the above example for description. Certainly, more signals may be collected. No limitation is imposed herein.

The first video signal is a video signal of a diagnosis interface displayed on the diagnosis device and recorded in real time during operation on the diagnosis interface of the diagnosis device performed by the user. For example, after the diagnosis device receives the touch operation of the user performed on the diagnosis interface, the displayed diagnosis interface changes, for example, a new diagnosis interface is generated, such as entering a next-level menu interface through a user operation, or icons displaying user operations are distinguished on the diagnosis interface. The diagnosis device may generate the first video signal through real-time screenshot, etc., that is, record a user operation change on the diagnosis interface during the diagnosis. The first video signal may be combined into the diagnosis case to instruct a user viewing the diagnosis case.

The second video signal is a video signal of the diagnosis site of the vehicle. In an example of automobile diagnosis, a diagnosis site may include a site at which maintenance personnel perform maintenance or inspection on an automobile or a site at which a state of an automobile changes after the automobile receives a diagnosis instruction sent by a diagnosis device. The diagnosis device may record the diagnosis site through a configured video collecting apparatus, such as a camera, to collect a second video signal. Alternatively, the second video signal sent by the video collecting apparatus at the diagnosis site is received. The diagnosis device may be connected to the video collecting apparatus at the diagnosis site in a wired or wireless manner to achieve communicative interaction. In this case, the diagnosis device can collect the second video signal without a need to be located at the diagnosis site. A plurality of video collecting apparatuses may be used to collect second video signals at different angles in the diagnosis site. For example, the second video signal collected by the video collecting apparatus is mainly configured to record an operation of the maintenance personnel. The second video signal collected by another video collecting apparatus is mainly configured to record a real-time state of the automobile, etc.

The first audio signal of the vehicle is an audio signal that is of a sound emitted by the vehicle and that is collected by the audio collecting apparatus during the diagnosis, such as a sound of an engine or a sound of a horn, etc. The first audio signal may be obtained by an audio collecting apparatus configured in the diagnosis device, or may be obtained by an audio collecting apparatus at a diagnosis site. The diagnosis device and the audio collecting apparatus at the diagnosis site may be connected in a wire or wireless manner. No limitation is imposed herein. If the first audio signal is to be collected by the audio collecting apparatus at the diagnosis site, the diagnosis device does not need to be at the diagnosis site, improving flexibility of the diagnosis device to obtain a diagnosis case through combination.

A second audio signal of the diagnosis personnel is an explanation voice of the on-site diagnosis personnel, for example, an explanation voice collected by the diagnosis personnel or the maintenance personnel through an audio collecting apparatus such as a microphone configured on the diagnosis device.

Optionally, the diagnosis device may further receive a second operation input by the user during the diagnosis of the vehicle; and determine at least one second signal according to the second operation. The collecting at least two signals further includes: collecting at least one of the second signals.

In this embodiment, the diagnosis device may also receive the second operation input by the user during the diagnosis of the vehicle. The second operation may be used to instruct the diagnosis device to collect a second signal. The second signal is different from the first signal obtained under instruction of the first operation. In other words, during the diagnosis of the vehicle, the collected signals may be increased, further improving the flexibility of generating a diagnosis cases and a diversity of the collected signals.

Likewise, the second signal includes: at least one of a first video signal of a recorded diagnosis operation picture, a second video signal of a recorded diagnosis site, a first audio signal of the vehicle and a second audio signal of a diagnosis person.

It should be noted that the at least two signals in this embodiment may be a same signal or different signals. For example, the at least two signals may be the first video signal, or may be the first video signal and the second video signal. Specifically, the diagnosis device may diagnose a plurality of items of the vehicle. In this case, a diagnosis operation screen of the diagnosis device actually includes a plurality of first video signals. A plurality of cameras may be disposed at different angles at a vehicle diagnosis site to record a video of the diagnosis process. In this case, each camera corresponds to a second video signal. When an internal component of the vehicle needs to be diagnosed, a state of the internal component may be further obtained through a disposed endoscope camera.

S 102: The at least two signals are combined into a diagnosis case of the vehicle.

In this embodiment, the diagnosis device combines the at least two signals into the diagnosis case of the vehicle. The diagnosis case may restore the diagnosis process through a plurality of signals. A diagnosis guidance effect for the user is better, no user operation is required, and the combining method is more convenient.

Exemplarily, if at least two signals include a video signal and an audio signal, the video signal and the audio signal may be combined based on a collecting moment. For example, a video frame and an audio frame existing at a same moment are combined, or a video signal and an audio signal existing at a same duration are combined. No limitation is imposed herein.

If at least two signals include two or more video signals, the plurality of video signals may be bound to the diagnosis case to obtain the diagnosis case of the vehicle through combination. The plurality of video signals may be stored independently or in a combined manner. No limitation is imposed herein. During invocation and output of the diagnosis case, the plurality of video signals may be displayed in a plurality of display areas. Each video signal corresponds to a display area, so that the user can observe a plurality of video signals simultaneously. For example, the diagnosis device displays second video signals at a plurality of angles in different display areas, or displays the first video signal and the second video signal in different display areas, respectively. Certainly, a plurality of video signals may be further combined to obtain a video signal. No limitation is imposed herein.

If the at least two signals include two or more audio signals, the plurality of audio signals may be bound to the diagnosis case to obtain the diagnosis case of the vehicle through combination. Further, if the moments at which the plurality of audio signals are collected overlap, during output of the diagnosis case, the plurality of audio signals may be played simultaneously within the overlapping time.

Further, One or more of the at least two signals may be processed before the at least two signals are combined. For example, the signal is processed so that the outputted audio or video signal is clearer. For example, when the moments of the plurality of audio signals overlap, an output volume or an output effect of one of the audio signals may be increased, or output volumes or output effects of one or more audio signals may be reduced. For example, if moments of the collected first audio signal and second audio signal overlap, an output volume of the first audio signal may be increased or an output volume of the second audio signal may be reduced to highlight an output effect of the first audio signal.

Optionally, the diagnosis device may also receive an editing operation performed by the user on the diagnosis case, and then edit the diagnosis case. For example, after receiving an annotation operation performed by the user on a diagnosis operation interface, an annotation input by the user may be recorded in the diagnosis operation interface, thereby implementing the editing operation performed by the user on the diagnosis case. Certainly, during the diagnosis, the diagnosis device may receive the editing operation performed by the user on the diagnosis operation interface, or receive the editing operation performed by the user on the diagnosis case during output of the diagnosis case after the diagnosis case is combined. No limitation is imposed herein.

In an example of automobile diagnosis, before the first operation input by the user is received, a vehicle converter interface VCI is first electrically connected to an on-board diagnostics OBD interface of the automobile, and communication with an ECU in the automobile is established. Therefore, when the diagnosis device runs the diagnosis software, the ECU in the automobile may be controlled to perform diagnosis according to a preset diagnosis procedure, and a diagnosis result fed back by the ECU is received through the VCI. Further, that an automobile diagnosis case is made using an external camera and an external recording apparatus is used as an example. First, an electrical connection is established to the external camera and/or the external recording apparatus through a USB interface. The external camera includes an endoscope camera. The external recording apparatus includes a microphone. Then, according to the first operation input by the user, an automobile diagnosis site video (a second video signal) recorded in real time by the external camera and an automobile sound (a first audio signal) and/or an explanation voice (a second audio signal) of diagnosis personnel at an automobile diagnosis site recorded by the external recording apparatus are received. Finally, a display screen picture of the human-computer interaction interface is recorded in real time, and the automobile sound and/or the explanation voice of the diagnosis personnel at the automobile diagnosis site are/is configured on the display screen picture. In this case, a vehicle diagnosis case with a plurality of signals is completed.

Optionally, after being completed, the vehicle diagnosis case may also be stored in a preset format. The preset format may be a format specified for a dedicated target player, or may be a traditional video format such as MP4 or RMVB. The collected audio and video information is compressed and combined using an audio and video compression algorithm. Therefore, a size and a number of multimedia case files are reduced, used storage space and traffic are reduced, and storage and forwarding are convenient.

In this embodiment, when the first operation input by the user is received, the at least two signals are collected during the diagnosis of the vehicle. The at least two signals are combined into the diagnosis case of the vehicle. Therefore, a plurality of pieces of information during the vehicle diagnosis is synchronously collected, and a multimedia diagnosis case including the plurality of pieces of information is made during the diagnosis, leading to a simpler and more convenient diagnosis case making process and a better effect.

FIG. 3 is a flowchart of a method for processing a vehicle diagnosis case according to Embodiment 2 of the present invention. As shown in FIG. 3, the method in this embodiment may include the following steps.

S201: When a first operation input by a user is received, at least two signals are collected during diagnosis of a vehicle.

S202: The at least two signals are combined into a diagnosis case of the vehicle.

For detailed implementations of steps S201 and S202 in this embodiment, refer to the related descriptions in FIG. 2, and details are not described herein.

S203: At least one signal in the diagnosis case is output.

Exemplarily, all or some signals in the diagnosis case may be output. Specifically, a signal to be output may be determined according to the user operation.

Optionally, if the at least one signal includes at least two video signals, a display area corresponding to each video signal on a display screen is determined. A corresponding video signal is displayed at the display area on the display screen.

Optionally, a third operation input by the user may be further received, and a display area corresponding to the third operation is determined. A manner of displaying a video signal in the display area corresponding to the third operation is adjusted.

In this embodiment, either of the following operations may be performed according to the third operation input by the user:
full-screen displaying of a diagnosis operation interface or full-screen displaying of a video recording interface for a vehicle diagnosis site.

When the diagnosis operation interface and the video playing interface for the vehicle diagnosis site are to be displayed on a same screen, a display area of the diagnosis operation interface is adjusted, and the adjustment includes: dragging a position of the display area and zooming in or out the display area.

When the diagnosis operation interface and the video playing interface for the vehicle diagnosis site are to be displayed on a same screen, a display area of the video playing interface for the vehicle diagnosis site is adjusted, and the adjustment includes: dragging a position of the display area and zooming in or out the display area.

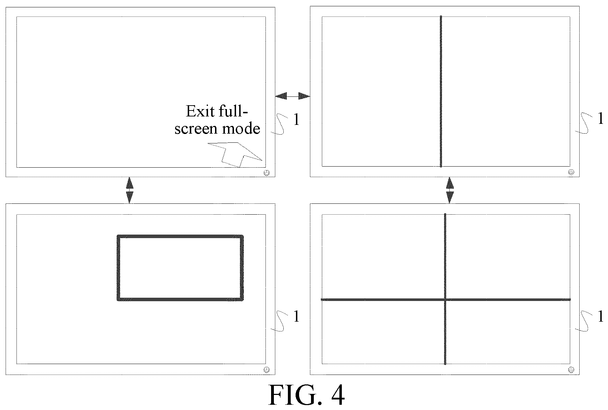

In this embodiment, referring to FIG. 4, FIG. 4 is a schematic diagram of a change in a human-machine interaction interface of a diagnosis device in the method for processing a vehicle diagnosis case according to Embodiment 2 of the present invention. As shown in FIG. 4, according to the third operation input by the user, the human-machine interaction interface of the diagnosis device may be switched between a full-screen display mode, a half-screen display (split-screen display) mode, a display mode with a larger screen and a smaller screen and a multi-screen display mode. The multi-screen display mode is applicable to a case in which a plurality of external cameras collect a plurality of recorded videos. A video may be displayed in each split screen window.

In this embodiment, when the first operation input by the user is received, the at least two signals are collected during the diagnosis of the vehicle. The at least two signals are combined into a diagnosis case of the vehicle, and at least one signal in the diagnosis case is output. Therefore, a plurality of pieces of information during the vehicle diagnosis is synchronously collected, and a multimedia diagnosis case including the plurality of pieces of information is made during the diagnosis, leading to a simpler and more convenient diagnosis case making process. In addition, at least one signal may be output according to user requirements, so that a display result of the diagnosis case is flexible and controllable.

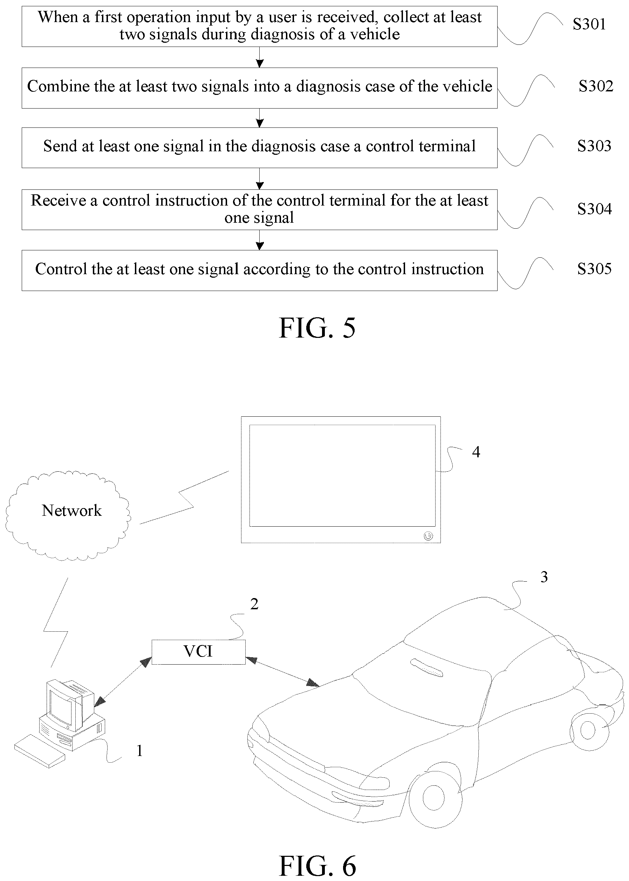

FIG. 5 is a flowchart of a method for processing a vehicle diagnosis case according to Embodiment 3 of the present invention. As shown in FIG. 5, based on the methods shown in FIG. 2 and FIG. 3, the method in this embodiment may include the following steps.

S301: When a first operation input by a user is received, at least two signals are collected during diagnosis of a vehicle.

S302: The at least two signals are combined into a diagnosis case of the vehicle.

For detailed implementations of steps S301 and S302 in this embodiment, refer to the related descriptions in FIG. 2, and details are not described herein.

S303: The at least one signal in the diagnosis case is sent to a control terminal, so that the control terminal outputs the at least one signal.

In this embodiment, the control terminal may be communicatively connected to the diagnosis device in a wired or wireless manner, and receive the at least one signal sent by the diagnosis device. In this embodiment, a number of signals received by the control terminal from the diagnosis device is not limited, and the control terminal may freely configure signals to be received. For example, the control terminal may choose to receive a first video signal, a second video signal, and a first audio signal, but shield a second audio signal.

Optionally, the method in FIG. 5 may further include:
S304: A control instruction of the control terminal for the at least one signal is received.

In this embodiment, the control terminal may send a control instruction for at least one signal to the diagnosis device. Specifically, the control instruction includes any of the following control instructions: an editing instruction, a screenshot instruction and a diagnosis instruction.

The editing instruction is used to add a text note or a file to an operation screen of diagnosis device. The file includes a picture, a text, a video and a voice.

The screenshot instruction is used to instruct the diagnosis device to capture a current display picture of a display screen.

The diagnosis instruction is used to control a diagnosis operation of the diagnosis device.

S305: The at least one signal is controlled according to the control instruction.

In this embodiment, the diagnosis device performs a corresponding operation according to the received control instruction. Specifically, a text note or a file may be added to the operation screen of the diagnosis device according to the received editing instruction. The file includes a picture, a text, a video and a voice. A current display picture of the current display screen may also be captured according to the screen capture instruction, and is then sent to the control terminal after storage. The diagnosis operation of the diagnosis device may also be controlled according to the diagnosis instruction. For example, a specific diagnosis procedure or diagnosis of any device of a to-be-diagnosed vehicle is controlled, etc. is controlled.

FIG. 6 is a schematic diagram of a second scenario according to the present invention. As shown in FIG. 6, this application scenario includes a diagnosis device 1, a VCI 2, a to-be-inspected vehicle 3 and a terminal 4. The diagnosis device 1 is electrically connected to an interface of an on-board diagnostics of the to-be-inspected vehicle 3 through the VCI 2. The terminal 4 remotely controls the diagnosis device 1 through a network. The diagnosis device 1 has diagnosis software installed therein, and has a human-machine interaction interface, a built-in camera and an audio recording apparatus. After the diagnosis device 1 establishes communication with the ECU in each system in the automobile through the VCI 2, the diagnosis software is run to implement automatic diagnosis of the to-be-inspected vehicle 3. During diagnosis, the terminal 4 is remotely connected to the diagnosis device 1 through the network, and can control the human-machine interaction interface of the diagnosis device 1 in a same screen, thereby remotely collecting an automobile diagnosis case.

In this embodiment, at least one signal in the diagnosis case is sent to a control terminal, so that the control terminal outputs the at least one signal, a control instruction of the control terminal for the at least one signal is received, and the at least one signal is controlled according to the control instruction. Therefore, the control terminal can remotely control the diagnosis device without professionals to visit the site, so as to diagnose different faults, thereby improving vehicle diagnosis efficiency.

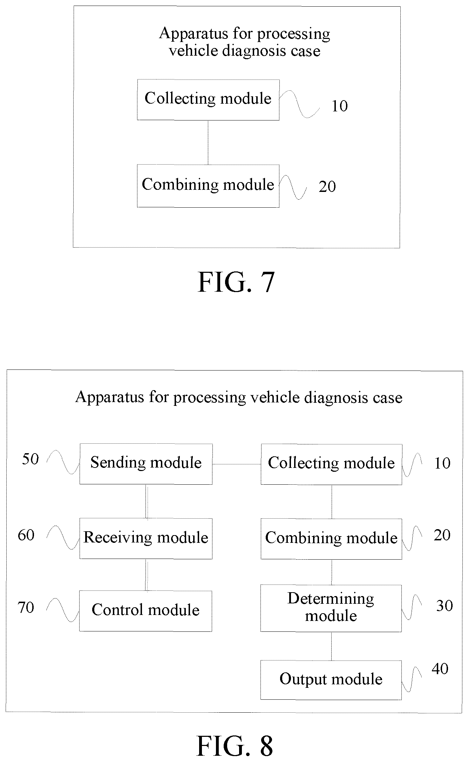

FIG. 7 is a schematic structural diagram of an apparatus for processing a vehicle diagnosis case according to Embodiment 4 of the present invention. As shown in FIG. 7, the apparatus in this embodiment may include:
a collecting module 10 configured to: when a first operation input by a user is received, collect at least two signals during diagnosis of a vehicle; and
a combining module 20 configured to combine the at least two signals into a diagnosis case of the vehicle.

In this embodiment, the technical solutions in the methods shown in FIG. 2, FIG. 3 and FIG. 5 may be implemented, and implementation processes and technical effects thereof are similar to those of the above methods. Details are not described herein again.

FIG. 8 is a schematic structural diagram of an apparatus for processing a vehicle diagnosis case according to Embodiment 5 of the present invention. As shown in FIG. 8, based on the apparatus shown in FIG. 7, the apparatus in this embodiment may include:
a determining module 30 configured to: before the at least two signals are collected during the diagnosis of the vehicle, determine at least two first signals according to the first operation.

The collecting at least two signals includes:
collecting at least two of the first signals.

Optionally, the collecting module 10 is further configured to: receive a second operation input by the user during the diagnosis of the vehicle; and
determine at least one second signal according to the second operation.

The collecting at least two signals further includes:
collecting at least one of the second signals.

Optionally, the first signal or the second signal includes:
at least one of a first video signal of a recorded diagnosis operation picture, a second video signal of a recorded diagnosis site, a first audio signal of the vehicle and a second audio signal of a diagnosis person.

Optionally, the apparatus further includes:
an output module 40 configured to output at least one signal in the diagnosis case.

Optionally, the outputting at least one signal in the diagnosis case includes:
if the at least one signal includes at least two video signals, determining a display area corresponding to each video signal on a display screen; and
displaying a corresponding video signal at the display area on the display screen.

Optionally, the collecting module 10 is further configured to: receive a third operation input by the user, and determine a display area corresponding to the third operation; and
adjust a manner of displaying a video signal in the display area corresponding to the third operation.

Optionally, the apparatus further includes:
a sending module 50 configured to send the at least one signal in the diagnosis case to a control terminal, so that the control terminal outputs the at least one signal.

Optionally, the apparatus further includes:
a receiving module 60 configured to receive a control instruction of the control terminal for the at least one signal; and
a control module 70 configured to control the at least one signal according to the control instruction.

In this embodiment, the technical solutions in the methods shown in FIG. 2, FIG. 3 and FIG. 5 may be implemented, and implementation processes and technical effects thereof are similar to those of the above methods. Details are not described herein again.

An embodiment of the present invention further includes a schematic structural diagram of a system for processing a vehicle diagnosis case. The system in this embodiment includes: a diagnosis device and a control terminal.

The diagnosis device is configured to perform the method according to any of the above.

The control terminal is configured to receive at least one signal sent by the diagnosis device and output the at least one signal.

The control terminal is further configured to send a control instruction for the at least one control signal to the diagnosis device, so that the diagnosis device controls the at least one signal according to the control instruction.

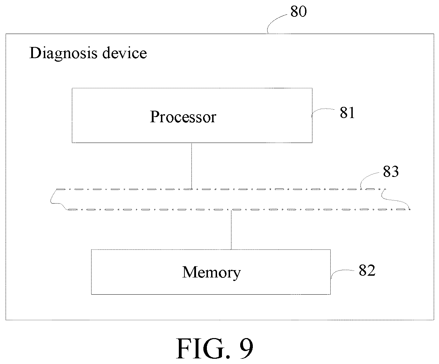

FIG. 9 is a schematic structural diagram of a diagnosis device according to Embodiment 6 of the present invention. As shown in FIG. 9, a diagnosis device 80 in this embodiment may include:
a processor 81 and a memory 82. The memory 82 and the processor 81 may be connected through a bus. The processor 81 may implement communication with a vehicle by controlling a communication interface.

The memory 82 is configured to store an executable instruction, and the memory may also be a flash memory.

The processor 81 is configured to execute the executable instruction stored in the memory to implement the steps in the method in the foregoing embodiment. For details, refer to related descriptions in the foregoing method embodiments.

Optionally, the memory 82 may be independent or integrated with the processor 81.

When the memory 82 is a device independent of the processor 81, the diagnosis terminal 80 may further include:
a bus 83 configured to connect the memory 82 and the processor 81.

Certainly, the diagnosis device may further include a general-purpose apparatus such as an input/output apparatus and a communication interface, etc., which are controlled by the processor 81 to implement the foregoing method.

In addition, the embodiment of the present disclosure provides a computer readable storage medium. The computer readable storage medium stores computer execution instructions, and when at least one processor of a user device executes the computer execution instructions, the user device performs the foregoing possible methods.

The computer-readable medium includes a computer storage medium and a communications medium, where the communications medium includes any medium that enables a computer program to be transmitted from one place to another. The storage medium may be any available medium accessible to a general-purpose or dedicated computer. For example, a storage medium is coupled to a processor, so that the processor can read information from the storage medium or write information into the storage medium. Certainly, the storage medium may be a component of the processor.

Persons of ordinary skill in the art may understand that: all or some of the steps of the foregoing method embodiments may be implemented by a program instructing relevant hardware. The aforementioned program may be stored in a computer-readable storage medium. During execution of the program, the steps of the foregoing method embodiments are performed; and the aforementioned storage medium includes: various media that can store program code, such as a ROM, a RAM, a magnetic disk, or an optical disc.

Finally, it should be noted that: The foregoing embodiments are merely intended for describing the technical solutions of the present disclosure other than limiting the present disclosure. Although the present disclosure is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present disclosure.

## Claims

1. A method for processing a vehicle diagnosis case, comprising:
when a first operation input by a user is received, collecting at least two signals during diagnosis of a vehicle; and
combining the at least two signals into a diagnosis case of the vehicle.

2. The method according to claim 1, wherein before the collecting at least two signals during diagnosis of a vehicle, the method further comprises:
determining at least two first signals according to the first operation; wherein
the collecting at least two signals comprises:
collecting at least two of the first signals.

3. The method according to claim 2, further comprising:
receiving a second operation input by the user during the diagnosis of the vehicle; and
determining at least one second signal according to the second operation; wherein
the collecting at least two signals further comprises:
collecting at least one of the second signals.

4. The method according to claim 3, wherein the first signal or the second signal comprises:
at least one of a first video signal of a recorded diagnosis operation picture, a second video signal of a recorded diagnosis site, a first audio signal of the vehicle and a second audio signal of a diagnosis person.

5. The method according to claim 4, further comprising:
outputting at least one signal in the diagnosis case.

6. The method according to claim 5, wherein the outputting at least one signal in the diagnosis case comprises:
if the at least one signal comprises at least two video signals, determining a display area corresponding to each video signal on a display screen; and
displaying a corresponding video signal at the display area on the display screen.

7. The method according to claim 6, further comprising:
receiving a third operation input by the user, and determining a display area corresponding to the third operation; and
adjusting a manner of displaying a video signal in the display area corresponding to the third operation.

8. The method according to any of claims 1 to 7, further comprising:
sending the at least one signal in the diagnosis case to a control terminal, so that the control terminal outputs the at least one signal.

9. The method according to claim 8, further comprising:
receiving a control instruction of the control terminal for the at least one signal; and
controlling the at least one signal according to the control instruction.

10. An apparatus for processing a vehicle diagnosis case, comprising:
a collecting module configured to: when a first operation input by a user is received, collect at least two signals during diagnosis of a vehicle; and
a combining module configured to combine the at least two signals into a diagnosis case of the vehicle.

11. The apparatus according to claim 10, further comprising:
a determining module configured to: before the at least two signals are collected during the diagnosis of the vehicle, determine at least two first signals according to the first operation; wherein
the collecting at least two signals comprises:
collecting at least two of the first signals.

12. The apparatus according to claim 11, wherein
the collecting module is further configured to: receive a second operation input by the user during the diagnosis of the vehicle; and
determine at least one second signal according to the second operation; wherein
the collecting at least two signals further comprises:
collecting at least one of the second signals.

13. The apparatus according to claim 12, wherein the first signal or the second signal comprises:
at least one of a first video signal of a recorded diagnosis operation picture, a second video signal of a recorded diagnosis site, a first audio signal of the vehicle and a second audio signal of a diagnosis person.

14. The apparatus according to claim 13, further comprising:
an output module configured to output at least one signal in the diagnosis case.

15. The apparatus according to claim 14, wherein the outputting at least one signal in the diagnosis case comprises:
if the at least one signal comprises at least two video signals, determining a display area corresponding to each video signal on a display screen; and
displaying a corresponding video signal at the display area on the display screen.

16. The apparatus according to claim 15, wherein the collecting module is further configured to: receive a third operation input by the user, and determine a display area corresponding to the third operation; and
adjust a manner of displaying a video signal in the display area corresponding to the third operation.

17. The apparatus according to any of claims 10 to 16, further comprising:
a sending module configured to send the at least one signal in the diagnosis case to a control terminal, so that the control terminal outputs the at least one signal.

18. The apparatus according to claim 17, further comprising:
a receiving module configured to receive a control instruction of the control terminal for the at least one signal; and
a control module configured to control the at least one signal according to the control instruction.

19. A diagnosis device, comprising:
a memory and at least one processor, wherein
the memory is configured to store a computer instruction,
the at least one processor being configured to invoke the computer instruction to perform the method according to any of claims 1 to 9.

20. A system for processing a vehicle diagnosis case, comprising: a diagnosis device and a control terminal, wherein
the diagnosis device is configured to perform the method according to any of claims 1 to 9;
the control terminal is configured to receive at least one signal sent by the diagnosis device and output the at least one signal; and
the control terminal is further configured to send a control instruction for the at least one control signal to the diagnosis device, so that the diagnosis device controls the at least one signal according to the control instruction.
